Europäisches Patentamt

European Patent Office (11) Numéro de publication: **0 075 834**

Office européen des brevets **B1**

(12) **FASCICULE DE BREVET EUROPÉEN**

(45) Date de publication du fascicule du brevet: 15.01.86

(51) Int. Cl.⁴: **H 02 K 1/18**

(21) Numéro de dépôt: **82108701.2**

(22) Date de dépôt: **21.09.82**

(54) **Stator à circuit magnétique feuilleté avec doigts de serrage pour machine dynamoélectrique, notamment du type à bulbe immergé.**

(30) Priorité: **24.09.81 FR 8118035**

(43) Date de publication de la demande: **06.04.83 Bulletin 83/14**

(45) Mention de la délivrance du brevet: **15.01.86 Bulletin 86/3**

(84) Etats contractants désignés: **AT BE CH DE FR GB IT LI SE**

(56) Documents cité:
**AT-B-123 617**
**DE-A-2 220 420**
**FR-A-2 305 879**
**US-A-2 761 987**

(73) Titulaire: **ALSTHOM, 38, avenue Kléber, F-75784 Paris Cédex 16 (FR)**

(72) Inventeur: **Gillet, Roger, 24, avenue d'Altkirch, F-90000 Belfort (FR)**
Inventeur: **Laumont, Yves, 3, rue des Champs Andelnans, F-90400 Danjoutin (FR)**

(74) Mandataire: **Weinmiller, Jürgen, Zeppelinstrasse 63, D-8000 München 80 (DE)**

## Description

La présente invention concerne un stator à circuit magnétique feuilleté avec doigts de serrage pour machine dynamoélectrique tournante notamment du type à bulbe immergé.

Un tel stator se présente sous la forme d'un ensemble globalement de révolution autour de l'axe de la machine, cet axe définissant ci-après la direction "longitudinale". Il comporte de manière connue un circuit magnétique constitué par un empilement, selon la direction longitudinale, de tôles minces formant des couronnes circulaires dans des plans transversaux. Le bord interne de ces tôles est creusé d'encoches réparties angulairement pour permettre le logement des barres d'enroulement statorique, la tôle subsistant entre deux encoches angulairement successives constituant une dent en saillie radiale vers l'intérieur. La partie pleine des tôles à l'extérieur des encoches forme une "couronne magnétique" conduisant circonférentiellement le flux magnétique statorique.

Cet empilement est maintenu serré à l'aide de doigts de serrage répartis angulairement à ses deux extrémités pour exercer une pression de serrage sur la couronne et chacune de ces dents. Chacun de ces doigts présente la forme d'une bande de tôle à longueur radiale, à hauteur longitudinale et à épaisseur tangentielle, une partie externe de la longueur du doigt s' étendant sur la couronne magnétique, et une partie interne sur une seule dent.

La force de serrage est appliquée à ces doigts par des tirants longitudinaux qui traversent tout l'empilement et sont munis d'écrous vissés à leurs extrémités. Ces tirants ne peuvent être placés dansles dents du circuit magnétique, même s'ils sont isolants, ceci en raison de la nécessité de conserver une section de passage suffisante pour le flux magnétique conduit par ces dents.

Ils sont donc toujours disposés dans la couronne. Malheureusement dans le cas de nombreux groupes bulbes, la hauteur de cette couronne, mesurée radialement est inférieure à la profondeur des encoches. Il en résulte que la force de serrage appliquée aux doigts par ces tirants est répartie incorrectement par ces doigts: la pression de serrage est trop forte sur la couronne magnétique, et trop faible sur les dents. Par alleurs ces tirants, quelle que soit leur position, sont sujets à des portes par courants induits s'ils sont métalliques, et diminuent la section d'acier magnétique disponible pour la passage du flux magnétique statorique.

Enfin le maintien au cours du temps de la force de serrage, qui tend à diminuer en service, n'est pas très facile, en raison des difficultés d'accès aux écrous. L'espace aux deux extrémités du circuit magnétique est en effet encombré par la présence des têtes d'enroulement statorique.

C'est pourquoi le document US-A-2 261 987 décrit un stator à circuit magnétique feuilleté avec doigts de serrage pour machine dynamoélectrique tournante. Ce stator n'utilise pas de tirants tels qu'indiqués ci-dessus. Selon ce document la pression de serrage est appliquée sur chaque doigt et à chacune des deux extrémités du paquet de tôles au moyen d'une vis ou tige de transmission de poussée s'appuyant longitudinalement et de manière réglable sur un disque élastique ou ressort en forme d'assiette. Cependant, le prix de revient d'un tel disque semble excessivement élevé, et le reglage de la force de serrage par vis et écrou semble mal commode dans le cas d'un groupe bulbe (difficulté d'accès).

La présente invention a pour but la réalisation d'un stator à circuit magnétique feuillaté avec doigts de serrage pour machine dynamoélectrique tournante notamment du type à bulbe immergé, ce stator évitant les inconvénients des tirants de serrage et autorisant d'une manière simple la choix de la meilleure répartition de la force de serrage entre les dents et la couronne magnétique, le contrôle et le resserrage du circuit, magnétique sans aucun démontage de la machine, ceci sans créer d'encombrement génant, et à un faible prix de revient.

Ce but est atteint par le stator tel que défini dans la revendication 1.

De préférence lesdites articulations intermédiaires des leviers de serrage sont poussées par l'intermédiaire de barres de répartition de poussée s'étendant circonférentiellement et communes chacune à plusieurs de ces leviers qui appliquant chacun une force de serrage à une dent, chacune de ces barres de répartition étant pousséa par deux dite tiges de transmission da poussée disposées de part et d'autre du milieu de cette barre de manière à permettre d'appliquer temporairement une poussée longitudinale positive à cette barre à l'aide d'un vérin disposé longitudinalement entre ces deux tiges et propre à exercer une poussée connue avec précision en s'appuyant sur un appui distant formé sur la carcasse à distance du circuit magnétique.

A l'aide des figures schématiquas ci-jointes, on va décrire ci-après, à titre non limitatif, commant l'invention peut être mise an oeuvre.

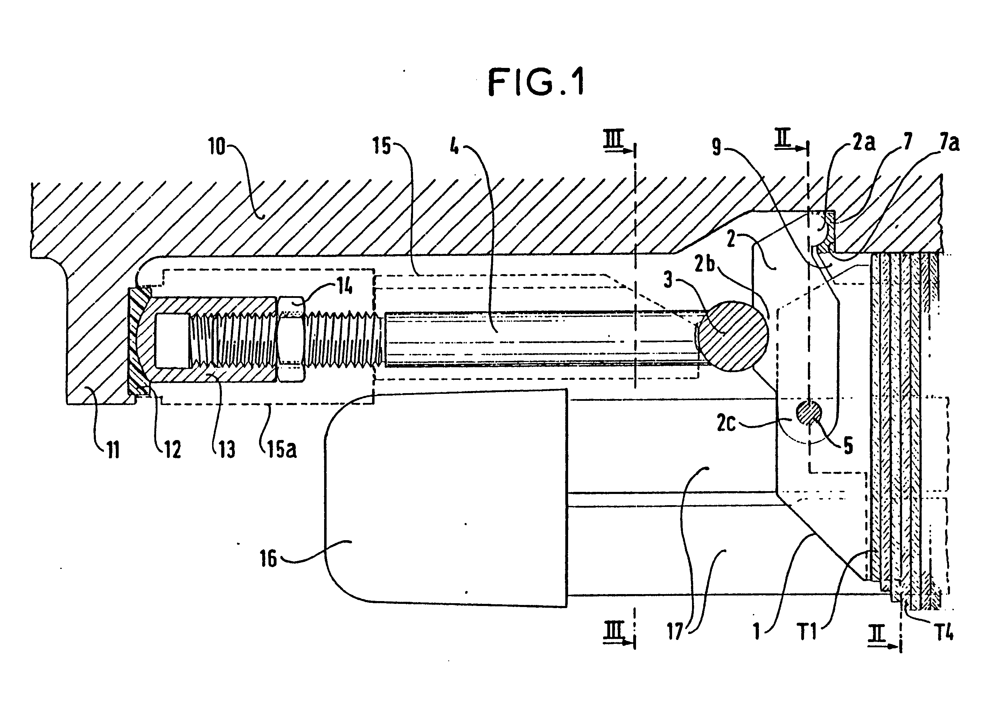

La figure 1 représente une vue partielle d'un stator selon l'invention, en coupe par un plan passant par l'axe de la machine.

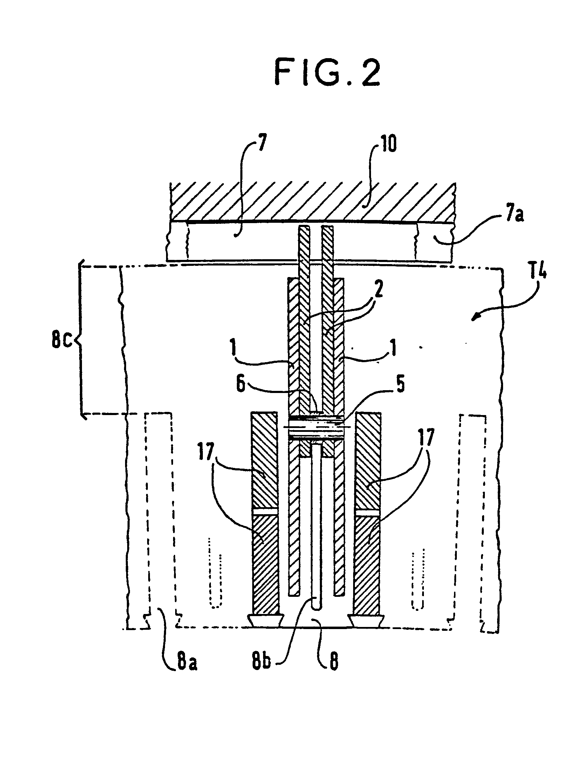

La figure 2 représente une vue partielle du même stator en coupe par des plans transversaux décalés selon la ligne II-II de la figure 1.

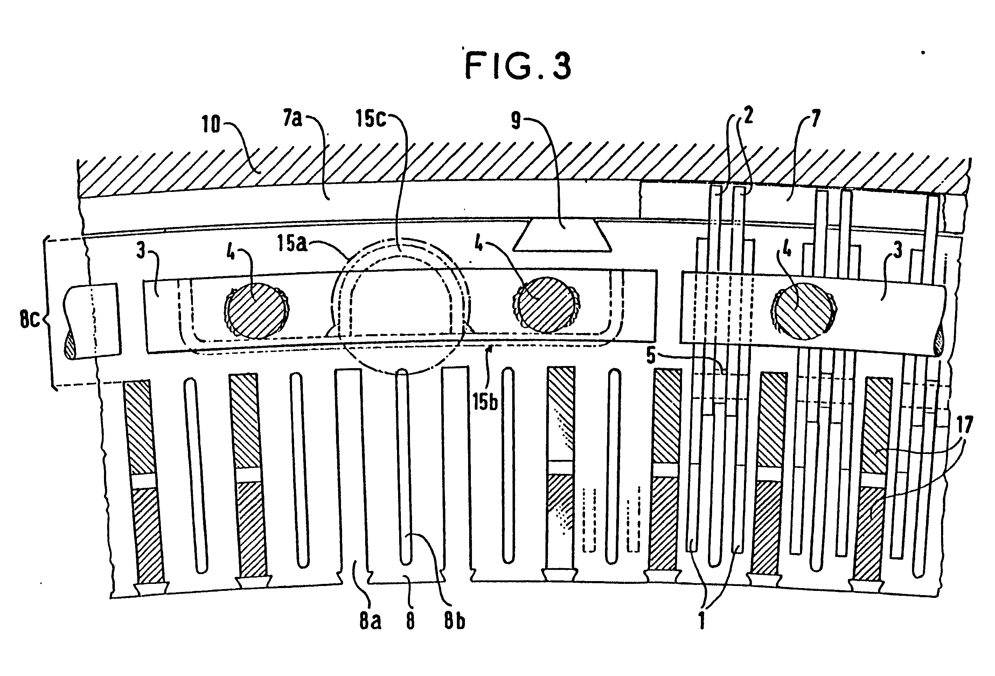

La figure 3 représente une vue partielle du même stator en coupe par un plan transversal III-III de la figure 1, les doigts et leviers de serrage étant enlevés sur une partie de cette figure et trois tôles extrêmes du circuit magnétique étant également enlevées sur toute cette figure, pour faciliter la comprehension du dessin.

On va d'abord indiquer les numéros de référence des pièces représentées sur ces figures

1 Doigt de serrage (il y a deux doigts par dent, chacun constitué par une tôle découpée disposée selon un plan radial longitudinal).

2 Levier de serrage constitué par deux tôles planes radiales longitudinales découpées, avec articulations extrême 2a, intermédiaire 2b, et interne 2c

3 Barre de répartition de poussée

4 Tige de transmission de poussée

5 Axe de doigts assurant l'appui das doigts sur l'articulation interne 2c du levier 2

6 Entretoise maintenant l'écartement entre les deux tôles du levier 2

7 Réglette d'appui du levier 2 sur la carcasse 10 maintenue radialement par l'extrémité des clavettes 9 dans une rainure dont un flanc 7a constitue ledit appui "proche"

T1, T4 Paquets de tôles magnétiques statoriques, quelques paquets de tôles extrêmes T1, T2, T3 ayant leurs bords internes en retrait, en forme d'escalier pour améliorer la repartition du flux magnétique.

8 - dents des tôles magnétiques 8a - encoches entre les dents

8b - évent percé dans l'axe des dents entre les deux doigts de serrage

8c - couronne du circuit magnétique

9 Clavette longtudinale de solidarisation mutuelle et d'accrochage des tôles à la carcasse, cette clavette constituant un dit "moyen d'accrochage"

10 Carcasse du stator

11 Couronne d'appui en saillie sur la carcasse et constituant ledit appui "distant"

12 Plaquette d'appui sur la couronne 11, constituant un élément intérmédiaire isolant

13 Ecrou borgne se vissant sur l'extrémité distante de la tige 4 pour constituer ledit "appui réglable"

14 Contre-écrou permettant le blocage de l'écrou 13

15 Outillage de serrage, permettant avec un vérin 15a, d'établir ou de rétablir la force de serrage, qui est ensuite maintenue par blocage de l'écrou 13

16 Tête d'enroulement statorique

17 Barre d'enroulement

Pour chaque dent 8 le serrage est effectué grâce aux deux doigts 1 disposés radialement de part et d'autre d'un éventuel canal d'évent 8b et recevant une force de serrage longitudinale sur un axe 5.

Compte tenu de la faible hauteur de la couronne 8c par rapport à la profondeur des encoches 8a, la position radiale optimale de cet axe coïncide avec les barres et têtes d'enroulement 17 et 16, qui empêchent de placer dans cette position des éléments de poussée longitudinaux.

C'est pourqoui ces doigts 1 sont articulés sur un levier 2 par l'intermédiaire de l'axe 5. Ce levier prend appui sur la carcasse 10 par l'intermédiaire d'une réglette 7 pouvant servir d'appui à plusieurs paires de tôles (5 paires dans notre exemple) constituant chacune un levier. Les deux tôles associées aux deux doigts de serrage ont leur écartement maintenu grâce à une entretoise 6. Les doigts de serrage 1 et les leviers 2 peuvent être découpés dans de la tôle d'acier.

Pour chaque dent le levier 2 associé est poussé par une barre de répartition de poussée 3 commune à plusieurs leviers (5 dans l'exemple). La force de poussée des barres 3 sur les leviers est fournie à chaque barre par deux tiges de transmission 4. La barre 3 est assujettie de façon permanente aux tiges 4 par exemple par soudure.

Les tiges 4 prennent appui sur une couronne 11 liée à la carcasse 10 a distance du circuit magnétique. Cet appui se fait par l'intermédiaire d'une plaquette isolante 12 en statifié de tissu de verre imprégné. Le réglage du serrage s'effectue grâce à un écrou borgne 13 se vissant sur les tiges et s'appuyant sur la plaquette. Un contre-écrou 14 permet de bloquer le réglage.

Le serrage du circuit magnétique se fait soit en exerçant un couple à l'aide d'une clé dynamométrique sur l'écrou 13 à l'extrémité des tiges de transmission 4 soit d'une façon globale et plus précise à l'aide d'outillages et de vérins.

L'outillage 15 pour le serrage par un vérin 15a est constitué d'une plaque 15b pliée à ses deux extrémités et portant en son milieu un raidisseur 15c. Il prend appui d'un côté sur la barre 3 en quatre points permettant une bonne répartition des efforts sur ladite barre, et de l'autre côté en son milieu sur le vérin. Ce dernier prend appui sur la couronne 11.

En multipliant le nombre des vérins (dans notre exemple 1 vérin pour 5 dents) et de plaques on peut serrer tout le circuit magnétique en même temps. Une fois obtenue la pression désirée on bloque les écrous 13 prenant appui sur la couronne 11 avec les contre-écrous 14. On peut ensuite enlever les vérins et les outillages 15.

Pour un stator de groupe bulbe présentant un diamètre extérieur de 5.550 mm avec une hauteur de couronne magnétique de 70 mm et une profondeur d'encoches de 105 mm, les barres de transmission de poussée 4 peuvent avoir par exemple une longueur de 260 mm et excercer chacune une force de 44.350 N le rapport de démultiplication de force des leviers 2 étant par exemple de 0,4 et les axes de doigts 5 étant placés à 78 mm du bord extérieur des tôles T1, T4.

**Revendications**

1/ Stator à circuit magnétique feuilleté avec doigts de serrage pour machine dynamoélectrique tournante notamment du type à bulbe immergé, ce stator présentant un axe longitudinal confondu avec celui de la machine, et comportant:

- un circuit magnétique constitué par un empilement, selon la direction longitudinale, de tôles minces (T4) formant des couronnes circulaires dans des plans transversaux, le bord interne de ces tôles étant creusé d'encoches (8a) réparties angulairement, la tôle subsistant entre deux encoches angulairement successives constituant une dent (8) en saillie radiale vers l'intérieur, la partie pleine des tôles à l'exterieur des encoches formant une "couronne magnétique" (8c) conduisant circonférentiellement le flux magnétique statorique, la hauteur de cette couronne mesurée radialement pouvant être inférieure à la profondeur des encoches mesurée également radialement,

- des barres d'enroulement (17) logées dans ces encoches avec leurs têtes (16) débordant longitudinalement de chaque côté de l'empilement,

- des doigts de "serrage" (1) répartis angulairement sur les deux extrémités de l'empilement pour répartir des forces de serrage sur la couronne et chacune de ces dents, chacun de ces doigts présentant une longueur radiale, une hauteur longitudinale et à épaisseur tangentielle, une partie externe de la longueur du doigt s'étendant sur ladite couronne magnétique, et une partie interne sur une seule desdites dents,

- des moyens d'appui de chaque côté de l'empilement pour appliquer ladite force de serrage à chacun de ces doigts,

- une carcasse (10) entourant le circuit magnétique et constituée par une tôle cylindrique épaisse, cette carcasse débordant longitudinalement de part et d'autre de l'empilement de tôles et des têtes d'enroulement,

- et des moyens d'accrochage (9) pour accrocher le bord externe des tôles magnétiques à la surface interne de la carcasse,

- ce stator étant caractérisé par le fait que chacun des doigts est muni d'un axe de doigt (5) pour recevoir une force de serrage, la direction de cet axe étant tangentielle, la position radiale de cet axe permettant au doigt d'assurer la répartition de la force de serrage entre la couronne magnétique (8c) et la dent (8),

- lesdits moyens d'appui pour appliquer la force de serrage comportant, à au moins une extrémité du circuit magnétique:

- un levier de serrage (2) s'étendant radialement en regard de chaque dent (8), muni d'une articulation externe (2a) s'appuyant sur un appui "proche" (7a) solidaire de la carcasse (10) au voisinage du doigt de serrage (1), muni encore d'une articulation intermédiaire (2b), et muni enfin d'une articulation interne (2c) appuyant sur ledit axe de doigt (5),

- et des tiges longitudinales de transmission de poussée (4) ayant chacune une extrémité "proche" poussant sur l'articulation intermédiaire (2b) d'au moins un levier de serrage (2), et une extrémité "distante" disposée au delà des têtes (16) des barres d'enroulement statorique et s'appuyant longitudinalement de manière réglable sur un appui "distant" (11) solidaire de la carcasse pour appliquer à cette articulation intermédiaire une poussée longitudinale, et pour que le levier de serrage transmette une fraction de cette poussée à l'axe de doigt (5) en la décalant vers l'axe du stator pour constituer ladite force de serrage.

2/ Stator selon la revendication 1, caractérisé par le fait que lesdites articulations intermédiaires (2b) des leviers de serrage (2) sont poussées par l'intermédiaire de barres de répartition de poussée (3) s'étendant circonférentiellement et communes chacune à plusieurs de ces leviers qui appliquent chacun une force de serrage a une dent (8), chacune de ces barres de répartition étant poussée par deux dites tiges de transmission de poussée (4) disposées de part et d'autre du milieu de cette barre de manière à permettre d'appliquer temporairement une poussée longitudinale positive à cette barre à l'aide d'un vérin disposé longitudinalement entre ces deux tiges et propre à exercer une poussée connue avec précision en s'appuyant sur un appui distant formé sur la carcasse à distance du circuit magnétique.

3/ Stator selon la revendication 2, caractérisé par le fait que chacune des tiges de transmission de poussée (4) s'appuie sur ledit appui distant (11) par l'intermédiaire d'un système à vis et écrou (13) réglable en longueur lors de la mise en oeuvre dudit vérin, et blocable après réglage de manière à permettre d'enlever ce vérin sans risquede diminution sensible de la force de serrage, l'écrou de ce système étant disposé longitudinalement au delà des têtes d'enroulement (16) de manière à permettre un accès facile.

4/ Stator selon la revendication 3, caractérisé par le fait que lesdits appuis proches sont constitués par une rainure (7a) creusée dans la surface interne de la carcasse (10), lesdits appuis distants (11) étant constitués par une saillie formés sur cette même surface interne.

5/ Stator selon la revendication 1, caractérisé par le fait que les tiges de transmission de poussée (4) sont constituées d'acier, sont soudées sur les barres de répartition de poussée (3) et s'appuient sur lesdits appuis distants (11) par l'intermédiaire d'éléments isolants évitant que des courants induits par les têtes d'enroulement puissent se fermer en parcourant deux tiges consécutives soudées à une même barre, et une partie de la carcasse (10) entre ces appuis distants.

6/ Stator selon la revendication 1, dans lequel chacune desdites dents (8) est percée d'un évent de refroidissement (8b) en forme de fente s'étendant selon un axe radial de cette dent,

- ce stator étant caractérisé par le fait que lesdits doigts (1) de serrage sont au nombre de deux de part et d'autre de cet évent avec un meme axe de doigt (5), ladite articulation interne (2c) du levier (2) appuyant sur cet axe de doigt entre ces deux doigts.

7/ Stator selon la revendication 3, caractérisé par le fait que chacune des barres de répartition de poussée (3) s'étend selon sa longueur en forme d'arc de cercle centré sur l'axe du stator, les tiges de transmission de poussée (4) étant placées de manière à équilibrer les forces appliquées à cette barre par ces tiges et les leviers (2) et à eviter ainsi toute flexion de ces tiges.

## Patentansprüche

1. Stator mit geblechtem Magnetkreis und Spannfingern für eine dynamoelektrische drehende Maschine, insbesondere vom Tauchkapseltyp, dessen Längsachse mit der Maschinenlängsachse zusammenfällt und der aufweist:

- einen Magnetkreis, der von einem längs ausgerichteten Stapel dünner Bleche (T4) gebildet wird, die in Querebenen kreisförmige Kronen bilden, wobei der innere Rand dieser Bleche winkelmäßig verteilt angeordnete Nuten (8a) aufweist und das zwischen zwei winkelmäßig aufeinanderfolgenden Nuten verbleibende Blech einen radial nach innen vorspringenden Zahn (8) bildet, während der volle Bereich der Bleche . außerhalb dieser Nut eine "Magnetkrone" (8c) bildet, die den Statormagnetfluß in Umfangsrichtung führt, und wobei die Höhe dieser Krone in radialer Richtung gemessen geringer als die Tiefe der Nuten, ebenfalls radial gemessen, sein kann,

- Wicklungsstäbe (17), die in diesen Nuten liegen, wobei die Wicklungsköpfe (16) in Längsrichtung auf jeder Seite des Stapels vorstehen,

- Spannfinger (1), die winkelmäßig verteilt auf den beiden Enden des Stapels liegen, um die Spannkraft auf die Krone und jeden der Zähne zu verteilen, wobei jeder dieser Finger eine Länge in radialer Richtung, eine Höhe in Längsrichtung und eine Dicke in tangentialer Richtung aufweist und der äußere Teil der Länge des Fingers sich auf der Magnetkrone erstreckt, während ein innerer Teil sich auf einen einzigen der Zähne erstreckt,

- Abstützungsmittel auf jeder Seite des Stapels, um die Spannkraft auf jeden der Finger aufzubringen,

- eine Karkasse (10), die den Magnetkreis umgibt und aus einem dicken Zylinderblech besteht, wobei diese Karkasse in Längsrichtung zu beiden Seiten des Blechstapels und der Wicklungsköpfe übersteht,

- und Befestigungsmittel (9) zur Befestigung des äußeren Rands der Magnetbleche an der inneren Oberfläche der Karkasse, dadurch gekennzeichnet, daß jeder der Finger mit einer Fingerachse (5) versehen ist, die die Spannkraft überträgt, wobei die Richtung dieser Achse tangential verläuft und die radiale Lage dieser Achse es dem Finger ermöglicht, die Spannkraft zwischen der Magnetkrone (8c) und dem Zahn (8) zu verteilen,

- wobei die Druckmittel zum Aufbringen der Spannkraft an mindestens einem Ende des Magnetkreises aufweisen:

- einen Spannhebel (2), der sich radial gegenüber jedem Zahn (8) erstreckt und ein äußeres Gelenk (2a), das sich auf einer "nahen" mit der Karkasse (10) in der Nähe des Spannfingers (1) fest verbundenen Abstützung (7a) abstützt, weiter ein Zwischengelenk (2b) und ein inneres Gelenk (2c) besitzt, das sich auf der Achse (5) des Fingers abstützt,

- und Längsstangen zur Druckübertragung (4), die je mit einem nahen Ende auf das Zwischengelenk (2b) mindestens eines Spannhebels (2) drücken und mit einem "entfernten" Ende, das sich jenseits der Köpfe (16) der Statorwicklungsstäbe befindet, sich in Längsrichtung in einstellbarer Weise auf einer "entfernten" Abstützung (11) abstützen, die mit der Karkasse verbunden ist, um auf dieses Zwischengelenk einen Längsdruck auszuüben und um einen Teil dieses Drucks des Spannhebels auf die Fingerachse (5) zu übertragen, indem diese in Richtung auf die Achse des Stators verschoben wird, um die Spannkraft zu erzeugen.

2. Stator nach Anspruch 1, dadurch gekennzeichnet, daß die Zwischengelenke (2b) der Spannhebel (2) über Druckverteilungsstangen (3) unter Druck gesetzt werden, die sich in Umfangsrichtung erstrecken, mehreren Hebeln jeweils gemeinsam sind und je eine Spannkraft auf einen Zahn (8) ausüben, wobei jede dieser Verteilungsstangen von zwei Druckübertragungsstangen (4) unter Druck gesetzt wird, die zu beiden Seiten der Mitte dieser Stange liegen und so vorübergehend einen positiven Längsdruck auf diese Stange mithilfe eines Spannmittels aufbringen können, das in Längsrichtung zwischen den beiden Stangen liegt und einen genau bekannten Druck erzeugen kann, indem es sich auf einer entfernten Abstützung abstützt, die auf der Karkasse entfernt vom Magnetkreis ausgebildet ist.

3. Stator nach Anspruch 2, dadurch gekennzeichnet, daß jede der Druckübertragungsstangen (4) sich auf der entfernten Abstützung (11) über ein Schraube-Mutter-System (13) abstützt, das in Längsrichtung durch Betätigung des Spannmittels einstellbar ist und nach der Einstellung blockierbar ist, so daß es möglich ist, das Spannmittel ohne die Gefahr einer wesentlichen Verringerung der Spannkraft zu entfernen, wobei die Mutter dieses Systems in Längsrichtung jenseits der Wicklungsköpfe (16) liegt, so daß sie leicht zugänglich ist.

4. Stator nach Anspruch 3, dadurch gekennzeichnet, daß die nahen Abstützungen von einer Rinne (7a) gebildet werden, die in die innere Oberfläche der Karkasse (10) eingeschnitten ist, während die entfernten Abstützungen (11) von einem Vorsprung auf dieser selben inneren Oberfläche gebildet werden.

5. Stator nach Anspruch 1, dadurch gekennzeichnet, daß die Druckübertragungsstangen (4) aus Stahl bestehen, auf die Druckverteilungsstangen (3) aufgeschweißt sind und sich auf den entfernten Abstützungen (11) über isolierende Elemente abstützen, durch die vermieden wird, daß von den Wicklungsköpfen induzierte Ströme sich schließen können, indem sie zwei aufeinanderfolgende und an eine gemeinsame Druckverteilungsstange angeschweißte Druckübertragungsstangen sowie einen Teil der Karkasse (10) zwischen diesen entfernten Abstützungen durchlaufen.

6. Stator nach Anspruch 1, in dem jeder Zahn (8) einen Kühlkanal (8b) in Form eines Schlitzes aufweist, der sich entlang einer radialen Achse dieses Zahns erstreckt, dadurch gekennzeichnet, daß diese Spannfinger (1) jeweils paarweise zu beiden Seiten dieses Kühlkanals vorgesehen sind und mit einer gemeinsamen Fingerachse (5) zusammenwirken, wobei das innere Gelenk (2c) des Hebels (2) sich auf dieser Fingerachse zwischen den beiden Fingern abstützt.

7. Stator nach Anspruch 3, dadurch gekennzeichnet, daß jede der Druckverteilungsstangen (3) bezüglich ihrer Länge als Kreisbogen geformt ist, der zur Achse des Stators konzentrisch liegt, und daß die Druckübertragungsstangen (4) so angeordnet sind, daß die auf diese Druckverteilungsstangen von den Druckübertragungsstangen und den Hebeln (2) aufgebrachten Kräfte ausgeglichen werden und jede Verbiegung dieser Druckübertragungsstangen verhindert wird.

**Claims**

1. A laminated magnetic circuit stator with clamping fingers for a rotating dynamoelectric machine, notably of the immersed bulb type, this stator having a longitudinal axis which coincides with that of the machine, and comprising
   - a magnetic circuit consisting of a stack, along the longitudinal direction, of thin metal sheets (T4) forming circular rings in transverse planes, the inner edge of the sheets being provided with angularly distributed notches (8a), the remaining sheet between two angularly successive notches constituting a tooth (8) projecting radially inwards, the solid part of the sheets externally of the notches forming a "magnetic crown" (8c) conducting the stator magnetic flux in the circumferential direction, the height of this crown as measured radially being possibly smaller than the depth of the notches, also as measured radially,
   - winding bars (17) housed in these notches with their heads (16) projecting longitudinally beyond each side of the stack,
   - "clamping" fingers (1) distributed angularly over the two ends of the stack to distribute clamping forces over the crown and each tooth, each of these fingers having a radial length, a longitudinal height and a tangential thickness, an external part of the length of the finger extending over said magnetic crown, and an internal part extending over one only of said teeth,
   - bearing means on each side of the stack to apply said clamping force to each of the fingers,
   - a carcass (10) surrounding the magnetic circuit and consisting of a thick cylindrical sheet, projecting longitudinally beyond each side of the stack and of the winding heads,
   - and engagement means (9) for engaging the outer edge of the magnetic sheets with the internal surface of the carcass, characterized in that each of the fingers is provided with a finger shaft (5) to receive a clamping force, the direction of this shaft being tangential, the radial position of this shaft enabling the finger to distribute the clamping force between the magnetic crown (8c) and the tooth (8),
   - said bearing means for applying the clamping force comprising at one end at least of the magnetic circuit:
   - a clamping lever (2) extending radially opposite each tooth (8) and having an external pivot (2a) bearing on a "near" support (7a) fastened to the carcass (10) in the vicinity of the clamping finger (1), an intermediate pivot (2b) and an internal pivot (2c) bearing on said finger shaft (5),
   - and longitudinal thrust transmitting rods (4), each with a "near" end bearing on the intermediate pivot (2b) of at least one clamping lever (2), and a "distant" end disposed beyond the heads (16) of the stator winding bars and bearing longitudinally and in an adjustable manner on a "distant" support (11) fastened to the carcass to apply a longitudinal thrust to the intermediate pivot and so that the clamping lever transmits a fraction of this thrust to the finger shaft (3), offsetting the latter towards the stator axis to constitute said clamping force.

2. A stator according to claim 1, characterized in that said intermediate pivots (2b) of the clamping lever (2) are loaded in thrust via thrust distribution bars (3) extending circumferentially and each common to a plurality of levers which each apply a clamping force to one tooth (8), each of the distribution bars being loaded in thrust by two of said thrust transmitting rods (4) disposed on each side of the center of said bar so as to permit temporary application of a positive longitudinal thrust to that bar by an actuator disposed longitudinally between the two rods and adapted to exert an acurately known thrust while bearing on a distant support formed in the carcass remote of the magnetic circuit.

3. A stator according to claim 2, characterized in that each of the thurst transmitting rods (4) bears on said distant support (11) via a system including a screw and a nut (13) adjustable in length on operation of said actuator and lockable after adjustment so as to permit removal of the actuator without risk of significant reduction of the clamping force, the nut of this system being disposed longitudinally beyond the winding head (16) to permit easy access.

4. A stator according to claim 3, characterized in that said near supports consist of a groove (7a) formed in the internal surface of the carcass (10), said distant supports (11) consisting in a projection formed on this same internal surface.

5. A stator according to claim 1, characterized in that the thrust transmitting rods (4) are made of steel, are welded to the thrust distribution bars (3) and bear on said distant supports (11) via insulating members preventing current induced by the winding head to flow through two consecutive rods welded to the same bar and a part of the carcass (10) between these distant supports.

6. A stator according to claim 1, in which each of said teeth (8) is provided with a cooling vent (8b) in the form of a slot extending along a radial axis of the tooth,
- characterized in that two clamping fingers (1) are provided on both sides of this vent with a common finger shaft (5), said internal pivot (2c) of the lever (2) bearing on the finger shaft between these two fingers.

7. A stator according to claim 3, characterized in that each of the thrust distribution bars (3) extends lengthwise in the shape of a circular arc centered on the stator axis, the thrust transmitting rods (4) being positioned so as to balance the forces applied to the bar by that rod and the levers (2) so as to avoid any bending of the rods.

FIG.1

# FIG.2

FIG.3